# FASCICULE DE BREVET EUROPEEN

(11) **EP 1 326 871 B1**
(45) Date de publication et mention de la délivrance du brevet: **01.02.2006**
(21) Numéro de dépôt: 01986691.2
(22) Date de dépôt: 09.10.2001
(51) Int. Cl.: C07F 7/08, C08K 5/31, C08K 5/548

(54) **ORGANOSILANE POLYFONCTIONNEL UTILISABLE COMME AGENT DE COUPLAGE ET SON PROCEDE D'OBTENTION**
POLYFUNKTIONELLE ORGANOSILANE FÜR DEN EINSATZ ALS KUPPLUNGSMITTEL SOWIE VERFAHREN ZU DEREN GEWINNUNG
POLYFUNCTIONAL ORGANOSILANE FOR USE AS COUPLING AGENT AND METHOD FOR OBTAINING SAME

(30) Priorité: 13.10.2000 FR 0013254
(43) Date de publication de la demande: 16.07.2003
(73) Titulaire: Société de Technologie Michelin, 63040 Clermont-Ferrand Cedex 09 (FR); MICHELIN RECHERCHE ET TECHNIQUE S.A., 1763 Granges-Paccot (CH)
(72) Inventeur: TARDIVAT, Jean-Claude, F-63000 Clermont-Ferrand (FR); BELIN, Laure, F-63200 Riom (FR); BLANCHARD, Christine, F-63200 MARSAT (FR)
(74) Mandataire: Ribière, Joel
(86) Numéro de dépôt international: PCT/EP2001/011668
(87) Numéro de publication internationale: WO 2002/030939

(56) Documents cités:
- WO-A-00/05301

## Description

La présente invention se rapporte aux agents de couplage polyfonctionnels, utilisables notamment pour le couplage de charges inorganiques renforçantes et d'élastomères diéniques dans des compositions de caoutchouc destinées par exemple à la fabrication de pneumatiques.

On sait que d'une manière générale, pour obtenir les propriétés de renforcement optimales conférées par une charge, il convient que cette dernière soit présente dans la matrice élastomérique sous une forme finale qui soit à la fois la plus finement divisée possible et répartie de la façon la plus homogène possible. Or, de telles conditions ne peuvent être réalisées que dans la mesure où la charge présente une très bonne aptitude, d'une part à s'incorporer dans la matrice lors du mélange avec l'élastomère et à se désagglomérer, d'autre part à se disperser de façon homogène dans cette matrice.

De manière tout à fait connue, le noir de carbone présente de telles aptitudes, ce qui n'est en général pas le cas des charges inorganiques. En effet, pour des raisons d'affinités réciproques, les particules de charge inorganique ont une fâcheuse tendance, dans la matrice élastomérique, à s'agglomérer entre elles. Ces interactions ont pour conséquence néfaste de limiter la dispersion de la charge et donc les propriétés de renforcement à un niveau sensiblement inférieur à celui qu'il serait théoriquement possible d'atteindre si toutes les liaisons (charge inorganique/élastomère) susceptibles d'être créées pendant l'opération de mélangeage, étaient effectivement obtenues ; ces interactions tendent d'autre part à augmenter la consistance à l'état cru des compositions caoutchouteuses et donc à rendre leur mise en oeuvre ("processabilité") plus difficile qu'en présence de noir de carbone.

Depuis que les économies de carburant et la nécessité de protéger l'environnement sont devenues une priorité, il s'est avéré cependant nécessaire de produire des pneumatiques ayant une résistance au roulement réduite, sans pénalisation de leur résistance à l'usure. Ceci a été rendu possible notamment grâce à la découverte de nouvelles compositions de caoutchouc renforcées de charges inorganiques spécifiques qualifiées de "renforçantes", capables de rivaliser du point de vue renforçant avec un noir de carbone conventionnel de grade pneumatique, tout en offrant à ces compositions une hystérèse plus faible, synonyme d'une plus basse résistance au roulement pour les pneumatiques les comportant.

De telles compositions de caoutchouc, comportant des charges inorganiques renforçantes du type siliceuses ou alumineuses, ont par exemple été décrites dans les brevets ou demandes de brevet EP-A-0501227 (ou US-A-5227425), EP-A-0735088 (ou US-A-5852099), EP-A-0810258 (ou US-A-5900449), EP-A-0881252, WO99/02590, WO99/02601, WO99/02602, WO99/28376, WO00/05300, WO00/05301.

On citera en particulier les documents EP-A-0501227, EP-A-0735088 ou EP-A-0881252 qui divulguent des compositions de caoutchouc diénique renforcées de silices précipitées à haute dispersibilité, de telles compositions permettant de fabriquer des bandes de roulement ayant une résistance au roulement nettement améliorée, sans affecter les autres propriétés en particulier celles d'adhérence, d'endurance et de résistance à l'usure. De telles compositions présentant un tel compromis de propriétés contradictoires sont également décrites dans les demandes EP-A-0810258 et WO99/28376, avec à titre de charges inorganiques renforçantes des charges alumineuses (alumines ou (oxyde)hydroxydes d'aluminium) spécifiques à dispersibilité élevée, ou encore dans les demandes WO00/73372 et WO00/73373 décrivant des oxydes de titane spécifiques du type renforçants.

L'utilisation de ces charges inorganiques spécifiques, hautement dispersibles, à titre de charge renforçante majoritaire ou non, a certes réduit les difficultés de mise en oeuvre des compositions de caoutchouc les contenant, mais cette mise en oeuvre reste néanmoins plus difficile que pour les compositions de caoutchouc chargées conventionnellement de noir de carbone.

En particulier, il est nécessaire d'utiliser un agent de couplage, encore appelé agent de liaison, qui a pour fonction d'assurer la liaison entre la surface des particules de charge inorganique et l'élastomère, tout en facilitant la dispersion de cette charge inorganique au sein de la matrice élastomérique.

On rappelle ici que par "agent de couplage" (charge inorganique/élastomère), on doit entendre, de manière connue, un agent apte à établir une liaison suffisante, de nature chimique et/ou physique, entre la charge inorganique et l'élastomère diénique ; un tel agent de couplage, au moins bifonctionnel, a par exemple comme formule générale simplifiée "Y-W-X", dans laquelle:
- Y représente un groupe fonctionnel (fonction "Y") qui est capable de se lier physiquement et/ou chimiquement à la charge inorganique, une telle liaison pouvant être établie, par exemple, entre un atome de silicium de l'agent de couplage et les groupes hydroxyle (OH) de surface de la charge inorganique (par exemple les silanols de surface lorsqu'il s'agit de silice);
- X représente un groupe fonctionnel (fonction "X") capable de se lier physiquement et/ou chimiquement à l'élastomère diénique, par exemple par l'intermédiaire d'un atome de soufre;
- W représente un groupe divalent permettant de relier Y et X.

Les agents de couplage ne doivent en particulier pas être confondus avec de simples agents de recouvrement de charge inorganique qui, de manière connue, peuvent comporter la fonction Y active vis-à-vis de la charge inorganique mais sont dépourvus de la fonction X active vis-à-vis de l'élastomère diénique.

Des agents de couplage, notamment (silice/élastomère diénique), ont été décrits dans un grand nombre de documents, les plus connus étant des organosilanes bifonctionnels porteurs d'au moins une fonction alkoxyle à titre de fonction Y, et, à titre de fonction X, d'au moins une fonction capable de réagir avec l'élastomère diénique telle que par exemple une fonction soufrée (i.e., comportant du soufre).

Ainsi, il a été proposé dans les demandes de brevet FR-A-2094859 ou GB-A-1310379 d'utiliser un agent de couplage mercaptoalkoxysilane pour la fabrication de bandes de roulement de pneumatiques. Il fut rapidement mis en évidence et il est aujourd'hui bien connu que les mercaptoalkoxysilanes sont susceptibles de procurer d'excellentes propriétés de couplage silice/élastomère, mais que l'utilisation industrielle de ces agents de couplage n'est pas possible en raison de la très forte réactivité des fonctions soufrées type thiols -SH (fonctions X) conduisant très rapidement au cours de la préparation des compositions de caoutchouc, dans un mélangeur interne, à des vulcanisations prématurées encore appelées "grillage" (*"scorching*"), à des viscosités à l'état cru très élevées, en fin de compte à des compositions de caoutchouc quasiment impossibles à travailler et à mettre en oeuvre industriellement. Pour illustrer ce problème, on peut citer par exemple les documents FR-A-2206330, US-A-3873489, US-A-4002594.

Pour remédier à cet inconvénient, il a été proposé de remplacer ces mercaptoalkoxysilanes par des polysulfures d'alkoxysilanes, notamment des polysulfures de bis-(alkoxylsilylpropyle) tels que décrits dans de très nombreux documents (voir par exemple FR-A-2149339, FR-A-2206330, US-A-3842111, US-A-3873489, US-A-3997581, EP-A-680997 ou US-A-5650457, EP-A-791622 ou US-A-5733963, DE-A-19951281 ou EP-A-1043357, WO00/53671). Parmi ces polysulfures, doivent être cités notamment le tétrasulfure de bis 3-triéthoxysilylpropyle (en abrégé TESPT) et le disulfure de bis 3-triéthoxysilylpropyle (en abrégé TESPD).

Ces polysulfures d'alkoxysilanes, en particulier le TESPT, sont généralement considérés comme les produits apportant, pour des vulcanisats comportant une charge inorganique renforçante, en particulier de la silice, le meilleur compromis en termes de sécurité au grillage, de facilité de mise en oeuvre et de pouvoir renforçant. Ils sont à ce titre les agents de couplage les plus utilisés aujourd'hui dans les compositions de caoutchouc pour pneumatiques, même s'ils sont relativement onéreux et, qui plus est, doivent être utilisés le plus souvent dans une quantité relativement importante.

Ces polysulfures d'alkoxysilanes présentent toutefois l'inconvénient de ralentir de manière sensible la cinétique de vulcanisation des compositions de caoutchouc les contenant, par rapport à celle des compositions conventionnelles renforcées par du noir de carbone. Les durées de cuisson plus longues qui en résultent peuvent pénaliser la mise en oeuvre industrielle de ces compositions de caoutchouc renforcées de charges inorganiques, comme celle des articles en caoutchouc les contenant.

Or, les Demanderesses ont découvert lors de leurs recherches des organosilanes nouveaux et spécifiques qui, de manière inattendue, permettent de pallier cet inconvénient relatif à la cinétique de cuisson, sans pénaliser par ailleurs les propriétés de couplage et donc de renforcement, offrant ainsi aux compositions élastomériques un compromis de propriétés amélioré par rapport à celui atteint jusqu'ici avec des alkoxysilanes polysulfurés, en particulier avec le TESPT.

Ces organosilanes spécifiques ne posent par ailleurs pas les problèmes précités de grillage prématuré et ceux de mise en oeuvre dus à une viscosité trop importante des compositions de caoutchouc à l'état cru, inconvénients propres aux mercaptoalkoxysilanes.

En conséquence, un premier objet de l'invention concerne un polysulfure de monohydroxysilane, de formule (I) : 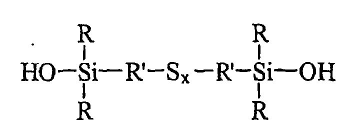
dans laquelle les radicaux R, identiques ou différents, sont des groupes hydrocarbonés ; les radicaux R', identiques ou différents, sont des groupes de liaison divalents ; x est supérieur ou égal à 2.

A la connaissance des Demanderesses, un tel monohydroxysilane polysulfuré n'avait jusqu'ici jamais été synthétisé, notamment dans le but d'une utilisation comme agent de couplage, en raison de forts préjugés relatifs à l'instabilité reconnue des organosilanes porteurs de fonctions hydroxyles. On rappelle ici que cette instabilité est due à une propension forte des groupes hydroxysilyles (≡Si-OH), en particulier en présence d'acides forts (générés par ailleurs lors de la synthèse d'organoxysilanes à partir de silanes halogénés), à se condenser sur eux-mêmes pour former des liaisons ≡Si-O-Si≡, en d'autres termes des liaisons siloxanes ; ce mécanisme est d'ailleurs mis à profit pour la synthèse des polysiloxanes (voir par exemple les ouvrages suivants: *"The Chemistry of organic silicon compounds",* S. Patai et Z. Rappoport, John Wiley & Sons, 1989, Part 1, 722-725 ; *"Siloxane polymers",* S.J. Clarson et J.A. Semlyen, Ellis Horwood Pretice-Hall, Elgelwood Cliffs N. J., 1993, 577-578 ; 597).

L'invention a d'autre part pour objet un procédé d'obtention d'un monohydroxysilane selon l'invention, comportant les étapes suivantes (R et R' ayant les significations précédentes):
- on part d'un organosilane halogéné (ci-après produit A) de formule (A) (Hal=halogène): 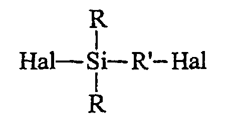
- optionnellement, on lui fait subir une alcoolyse par action d'un alcool (R"-OH) en présence d'une base organique destinée à piéger l'halogénure d'acide formé, pour obtenir un monoalkoxysilane de formule (B) (ci-après produit B): 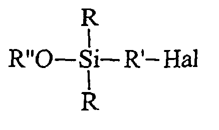
- on conduit, dans un solvant organique inerte, une hydrolyse par action d'un donneur d'hydroxyles :
   - soit sur le produit (A), en présence, dans ce cas, d'une base organique pour piéger l'halogénure d'acide formé, le donneur d'hydroxyles étant de l'eau ;
   - soit, le cas échéant, sur le produit (B), le donneur d'hydroxyles étant une base minérale et le solvant organique étant un solvant polaire,

   pour obtenir un monohydroxysilane (produit C) de formule (C) : 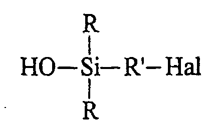
- on conduit finalement une étape de sulfuration sur le produit C, par action d'un polysulfure, pour aboutir au produit de formule (I) visé.
   L'invention a également pour objet l'utilisation à titre d'agent de couplage d'un monohydroxysilane conforme à l'invention, en particulier à titre d'agent de couplage (charge inorganique/élastomère diénique) dans une composition de caoutchouc.

L'invention ainsi que ses avantages seront aisément compris à la lumière de la description et des exemples de réalisation qui suivent, ainsi que des figures relatives à ces exemples qui représentent :
- fig. 1 : des rhéogrammes (courbes de cuisson) enregistrés pour des compositions de caoutchouc comportant, à titre d'agent de couplage, des organosilanes polyfonctionnels, conformes ou non à l'invention;
- fig. 2 : des courbes de variation de module en fonction de l'allongement pour ces compositions de caoutchouc.

### I. MESURES ET TESTS UTILISES

Les compositions de caoutchouc, dans lesquelles sont testés les agents de couplage organosilanes, sont caractérisées avant et après cuisson, comme indiqué ci-après.

### I-1. Plasticité Mooney

On utilise un consistomètre oscillant tel que décrit dans la norme française NF T 43-005 (1991). La mesure de plasticité Mooney se fait selon le principe suivant : la composition à l'état cru (i.e., avant cuisson) est moulée dans une enceinte cylindrique chauffée à 100°C. Après une minute de préchauffage, le rotor tourne au sein de l'éprouvette à 2 tours/minute et on mesure le couple utile pour entretenir ce mouvement après 4 minutes de rotation. La plasticité Mooney (ML 1+4) est exprimée en "unité Mooney" (UM, avec 1 UM = 0.83 N.m).

### I-2. Temps de grillage

Les mesures sont effectuées à 130°C, conformément à la norme française NF T 43-005 (1991). L'évolution de l'indice consistométrique en fonction du temps permet de déterminer le temps de grillage des compositions de caoutchouc, apprécié conformément à la norme précitée par le paramètre T5 (cas d'un grand rotor), exprimé en minutes, et défini comme étant le temps nécessaire pour obtenir une augmentation de l'indice consistométrique (exprimée en UM) de 5 unités au dessus de la valeur minimale mesurée pour cet indice.

### I-3. Essais de traction

Ces essais permettent de déterminer les contraintes d'élasticité et les propriétés à la rupture. Sauf indication différente, ils sont effectués conformément à la norme française NF T 46-002 de septembre 1988. On mesure en seconde élongation (i.e., après un cycle d'accommodation au taux d'extension prévu pour la mesure elle-même) les modules sécants nominaux (ou contraintes apparentes, en MPa) à 10% d'allongement (noté M10), 100% d'allongement (noté M100) et 300% d'allongement (noté M300). On mesure également les contraintes à la rupture (en MPa) et les allongements à la rupture (en %). Toutes ces mesures de traction sont effectuées dans les conditions normales de température et d'hygrométrie selon la norme française NF T 40-141 (décembre 1979).

Un traitement des enregistrements de traction permet également de tracer la courbe de module en fonction de l'allongement (voir figure 2 annexée), le module utilisé ici étant le module sécant vrai mesuré en première élongation, calculé en se ramenant à la section réelle de l'éprouvette et non à la section initiale comme précédemment pour les modules nominaux.

### I-4. Propriétés dynamiques

Les propriétés dynamiques sont mesurées sur un viscoanalyseur (Metravib VA4000), selon la norme ASTM D5992-96. On enregistre la réponse d'un échantillon de composition vulcanisée (éprouvette cylindrique de 4 mm d'épaisseur et de 400 mm² de section), soumis à une sollicitation sinusoïdale en cisaillement simple alterné, à la fréquence de 10Hz, dans les conditions normales de température (23°C) selon la norme ASTM D 1349 - 99. On effectue un balayage en amplitude de déformation de 0,1 à 50% (cycle aller), puis de 50% à 1% (cycle retour) ; pour le cycle retour, on enregistre la valeur maximale observée du facteur de perte tan(δ), notée tan(δ)ₘₐₓ.

### I-5. Rhéométrie

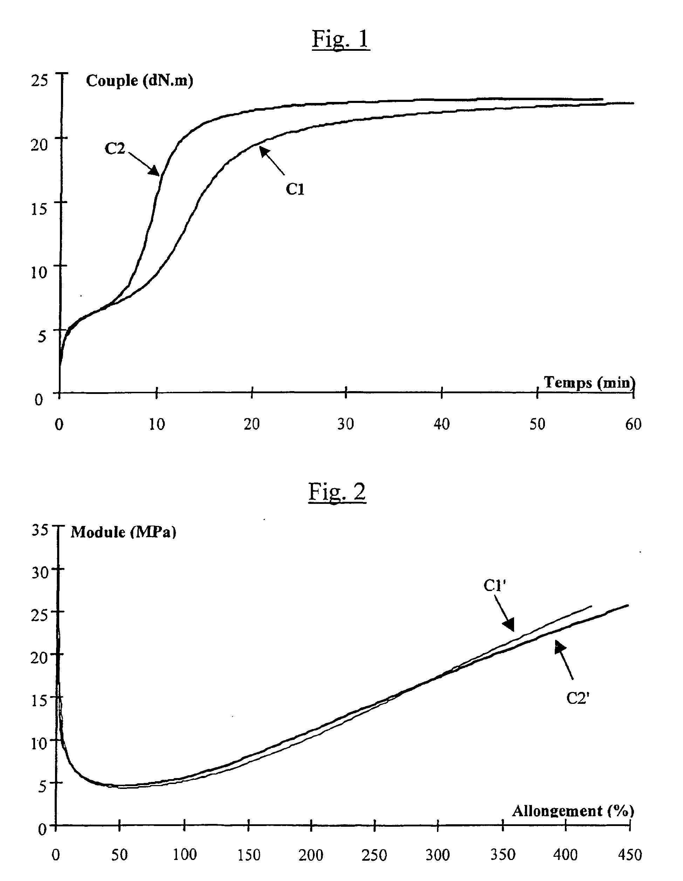

Les mesures sont effectuées à 150°C avec un rhéomètre à chambre oscillante, selon la norme DIN 53529 - partie 3 (juin 1983). L'évolution du couple rhéométrique en fonction du temps décrit l'évolution de la rigidification de la composition par suite de la réaction de vulcanisation (voir figure 1 annexée). Les mesures sont traitées selon la norme DIN 53529 - partie 2 (mars 1983) : les couples minimum et maximum, mesurés en déciNewton.mètre (dN.m), sont respectivement nommés Cₘᵢₙ et C_{max ;} tᵢ est le délai d'induction, c'est-à-dire le temps nécessaire au début de la réaction de vulcanisation ; t_{α}, (par exemple t₉₉) est le temps nécessaire pour atteindre une conversion de α%, c'est-à-dire α% (par exemple 99%) de l'écart entre les couples minimum et maximum. On mesure également l'écart, noté ΔCouple (en dN.m), entre les couples minimum et maximum ainsi que la constante de vitesse de conversion K (en min⁻¹) qui permet d'apprécier la cinétique de vulcanisation.

### II. CONDITIONS DE REALISATION DE L'INVENTION

### II-1. Hydroxysilane polysulfuré de l'invention

Le premier objet de l'invention est un polysulfure (avec x ≥ 2, c'est-à-dire disulfure inclus) de monohydroxysilane répondant à la formule (I) précitée dans laquelle les radicaux R, identiques ou différents, sont des groupes hydrocarbonés, les radicaux R', identiques ou différents, sont des groupes de liaison divalents, et x est supérieur ou égal à 2.

Un tel organosilane répond bien à la définition d'agent de couplage, dans la mesure où il comporte par molécule:
- d'une part au moins un groupe fonctionnel (fonction polysulfure Sₓ à titre de fonction "X") capable de former une liaison stable avec un polymère tel qu'un élastomère diénique;
- d'autre part, un groupe hydroxyle (OH) sur chaque atome de silicium - fonction dite hydroxysilyle (≡Si-OH)-, à titre de fonction "Y", lui permettant de se greffer sur différents substrats (par exemple métalliques ou minéraux) tels que la surface d'une charge inorganique renforçante.

Les radicaux R, linéaires ou ramifiés, comportent de préférence de 1 à 15 atomes de carbone; ils sont plus préférentiellement choisis parmi les alkyles, cycloalkyles ou aryles, en particulier parmi les alkyles en C₁-C₆, les cycloalkyles en C₅-C₈ et le radical phényle. Parmi ces radicaux, on citera notamment, à titre d'exemples, ceux choisis dans le groupe constitué par méthyle, éthyle, n-propyle, iso-propyle, n-butyle, sec-butyle, tert-butyle, n-pentyle, néopentyle, n-hexyle, 2-éthylhexyle, n-octyle, iso-octyle, cyclopentyle, cyclohexyle, 2-méthylcyclohexyle, phényle, toluyle, benzyle.

Plus préférentiellement encore, ce sont des alkyles en C₁-C₃ (à savoir méthyle, éthyle, n-propyle, iso-propyle), tout particulièrement choisis parmi méthyle et éthyle.

Les radicaux R', substitués ou non substitués, sont de préférence des radicaux hydrocarbonés, saturés ou non saturés, comportant de 1 à 18 atomes de carbone, ces radicaux R' pouvant être interrompus au sein de la chaîne hydrocarbonée par au moins un hétéroatome tel que O, S ou N. Conviennent notamment des groupements alkylène en C₁-C₁₈ ou des groupements arylène en C₆-C₁₂, plus particulièrement des alkylènes en C₁-C₁₀, notamment en C₁-C₄, en particulier ceux choisis parmi méthylène, éthylène et propylène.

En d'autres termes, le monohydroxysilane polysulfuré de l'invention est plus préférentiellement un polysulfure (symétrique ou dissymétrique en ce qui concerne la nature des radicaux R ou R') de bis-(monohydroxy-alkyl(C₁-C₁₈)-silylalkyl(C₁-C₁₅)) répondant à la formule générale (I) précédente, en particulier un polysulfure de bis-(monohydroxy-alkyl(C₁₋C₃)-silyl(méthyle, éthyle ou propyle).

Des hydroxysilanes de formule (I) particulièrement préférentiels sont ceux dans lesquels les radicaux R sont des groupes alkyles en C₁-C₃ et les radicaux R' sont des alkylènes en C₁-C₄, avec x supérieur ou égal à 2.

Parmi ces derniers, on citera en particulier les polysulfures de bis-(alkyl(C₁₋C₄)diméthylsilanol) - soit R = Me (méthyle) - répondant à la forrnule (II) qui suit: 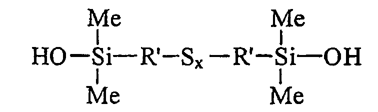
dans laquelle x ≥ 2 et les radicaux R' sont des alkylènes en C₁-C₄, en particulier le méthylène, l'éthylène ou le propylène, plus particulièrement le propylène.

A titre d'exemple, on citera un polysulfure de bis-(propyldiméthylsilanol) de formule particulière (III) qui suit :

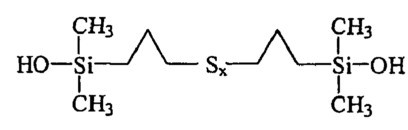

Dans ces formules (I) à (III), le nombre x d'atomes de soufre peut varier dans une large mesure, par exemple de 2 à 9, selon les conditions particulières de synthèse du monohydroxysilane ; toutefois, les valeurs de x sont de préférence choisies dans un domaine de 2 (disulfures) à 6 (hexasulfures) en passant par les trisulfures (x=3), les tétrasulfures (x=4) et pentasulfures (x=5) correspondants. Plus préférentiellement encore, x est choisi compris dans un domaine de 2 à 4.

Les monohydroxysilanes polysulfurés ci-dessus peuvent être préparés selon un procédé de synthèse nouveau qui constitue un autre objet de la présente invention.

### II-2. Procédé de synthèse

Le procédé conforme à l'invention, pour préparer un monohydroxysilane de formule (I) précédente comporte les étapes suivantes:
- on part d'un organosilane halogéné (ci-après produit A) de formule (A) (Hal=halogène): 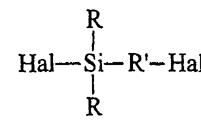
- optionnellement, on lui fait subir une alcoolyse par action d'un alcool (R"-OH) en présence d'une base organique destinée à piéger l'halogénure d'acide formé, pour obtenir un monoalkoxysilane de formule (B) (ci-après produit B): 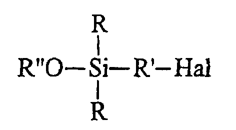
- on conduit, dans un solvant organique inerte, une hydrolyse par action d'un donneur d'hydroxyles :
   - soit sur le produit (A), en présence, dans ce cas, d'une base organique pour piéger l'halogénure d'acide formé, le donneur d'hydroxyles étant de l'eau ;
   - soit, le cas échéant, sur le produit (B), le donneur d'hydroxyles étant une base minérale et le solvant organique étant un solvant polaire,

   pour obtenir un monohydroxysilane (produit C) de formule (C) : 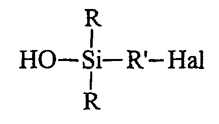
- on conduit finalement une étape de sulfuration sur le produit C, par action d'un polysulfure, pour aboutir au produit de formule (I) visé.

Certaines étapes (alcoolyse, sulfuration) de ce procédé conforme à l'invention, tout du moins dans leurs principes généraux, ont déjà été appliquées à la synthèse d'alkoxysilanes soufrés tels que des mercaptoalkoxysilanes ou des alkoxysilanes polysulfures (voir notamment FR-A-2149339 ou US-A-4076550, FR-A-2206330, EP-A-0694552 ou US-A-5405985). Mais, à la connaissance des Demanderesses, les étapes ci-dessus n'avaient jusqu'ici jamais été décrites en combinaison pour l'obtention de monohydroxysilanes polysulfurés.

Les halogènes (Hal) du silane de départ (produit A) peuvent être identiques ou différents, choisis de préférence parmi brome et chlore ; on utilise plus préférentiellement le chlore. D'une manière générale, les halogénosilanes de départ (produits A) et leurs dérivés intermédiaires (produits B ou C) sont des produits liquides ; ils peuvent donc être utilisés tels quels ou bien à l'état dilué dans un solvant approprié, lors de la mise en oeuvre des différentes étapes du procédé de l'invention.

La première étape d'alcoolyse, optionnelle, consiste donc à substituer l'halogène (Hal) porté par l'atome de silicium du produit A par le groupement alkoxyle (OR") d'un alcool, en présence d'une base organique destinée à piéger l'halogénure d'acide libéré au cours de la réaction. Le radical hydrocarboné R" de l'alcool (R"-OH) comporte de préférence de 1 à 8 atomes de carbone ; il est plus préférentiellement choisi parmi les alkyles en C₁-C₆, plus préférentiellement encore parmi les alkyles en C₁-C₃, en particulier le méthyle ou l'éthyle. A titre de base organique destinée à piéger l'halogénure d'acide formé, on peut utiliser une amine, de préférence une amine tertiaire telle que la triéthylamine. Afin de mieux piéger l'halogénure d'acide, l'alcoolyse est conduite à une température qui est de préférence inférieure à 15°C, plus préférentiellement inférieure à 10°C.

L'étape d'hydrolyse peut être également réalisée directement sur le silane halogéné de départ (produit A), par action de l'eau dans un solvant organique inerte, par exemple un éther et en présence d'une base organique destinée comme précédemment à piéger l'halogénure d'acide formé.

On préfère toutefois alcoolyser le silane halogéné de départ avant de l'hydrolyser. Cette hydrolyse du produit B est conduite dans un solvant organique polaire, de préférence un alcool, par action d'une base minérale en solution aqueuse ; la base minérale est de préférence un hydroxyde alcalin ou alcalino-terreux, notamment l'hydroxyde de sodium (NaOH). La base est préférentiellement utilisée en léger excès, cet excès étant neutralisé en fin de réaction par un acide faible tel que le dihydrogénophosphate de potassium. Le solvant organique polaire est de préférence un alcool en C₁-C₆, plus préférentiellement en C₁-C₃, plus particulièrement le méthanol.

Pour l'étape de sulfuration finale, on peut utiliser un polysulfure (x ≥ 2) d'ammonium ou métallique, de formule M₂Sₓ ou M'Sₓ (M = métal alcalin ou NH₄ ; M' = Zn ou métal alcalino-terreux) ; des exemples de tels composés sont les polysulfures de Na, K, Cs, Rb, Ca, Mg, Zn et NH₄, x étant de préférence compris dans un domaine de 2 à 6, plus préférentiellement de 2 à 4. On utilise de préférence un polysulfure de sodium Na₂Sₓ, en particulier Na₂S₂, Na₂S₃, Na₂S₄, Na₂S₅, Na₂S₆, ce polysulfure étant de préférence généré par action de soufre (S₈) sur Na₂S. De manière connue, la préparation des polysulfures est réalisée dans un solvant, organique ou non, tel que par exemple de l'eau, des alcools, des cétones ou des éthers, solvants dans lesquels les réactifs sont solubles partiellement ou totalement.

Toutefois, afin d'éliminer tout risque de formation de sous-produits du type polysulfures d'alkoxysilanes, due à une réaction parasite d'alcoolyse des fonctions silanols du produit C, on préfère conduire l'étape de sulfuration en l'absence de tout alcool ; on travaille alors de préférence en phase aqueuse, plus préférentiellement dans un milieu biphasique eau/solvant organique (par exemple toluène, xylène, benzène, heptane ou équivalents), comme décrit dans les documents EP-A-0694552 ou US-A-5405985 précités relatifs à la synthèse d'alkoxysilanes polysulfurés. La réaction est alors conduite de manière connue en présence d'un catalyseur de transfert de phase et d'un sel de formule M"Hal ou M"SO₄ (M" choisi parmi Li, Na, K ; Hal choisi parmi F, Cl et Br). Le sel utilisé est choisi de préférence parmi NaCl, NaBr, Na₂SO₄ ; on utilise plus préférentiellement NaCl. La quantité de sel peut varier par exemple de 10% en poids de la solution aqueuse jusqu'à saturation complète de la solution. Le catalyseur de transfert de phase est par exemple le bromure de tétrabutyl-ammonium (TBAB).

L'étape de sulfuration est conduite de préférence sous gaz inerte tel que l'argon. La température du milieu réactionnel n'est pas critique, on peut par exemple travailler à température ambiante ; on préfère toutefois opérer à chaud pour augmenter la vitesse de réaction, par exemple entre 60°C et 100°C voire jusqu'au point d'ébullition du solvant. Le ratio molaire entre l'hydroxysilane (produit C) et le polysulfure (d'ammonium ou métallique) est de préférence ajusté de manière à avoir un léger excès de polysulfure par rapport à la quantité stoechiométrique.

Si la sulfuration est conduite en phase organique, le produit C est lui-même de préférence pré-dilué dans le solvant organique inerte tel qu'un alcool, une cétone ou un éther. Lorsque la réaction est terminée, on élimine par filtration le sel (halogénure de métal) qui s'est formé et on débarrasse le filtrat du solvant organique par distillation sous vide. Dans le cas d'une sulfuration en phase aqueuse ou biphasique (eau/solvant organique), on isole le cas échéant la phase organique contenant le produit D et on distille sous vide le solvant résiduel.

Les monohydroxysilanes polysulfurés synthétisés selon le procédé décrit ci-dessus sont en fait des mélanges de polysulfures (par exemple de x=2 à x=9), avec par conséquent une valeur moyenne pour x qui est différente d'une valeur entière. La valeur moyenne visée pour x est préférentiellement comprise entre 2 et 6, plus préférentiellement dans un domaine de 2 à 4.

### II-3. Utilisation à titre d'agent de couplage

Comme indiqué supra, le composé de l'invention, grâce à sa double fonctionnalité, trouve une application industrielle avantageuse comme agent de couplage, destiné par exemple à assurer la liaison ou adhésion entre une matrice polymérique réactive (notamment une matrice de caoutchouc) et toute matière à surface hydroxylée, notamment minérale (par exemple, une fibre de verre) ou métallique (par exemple, un fil en acier au carbone ou en acier inoxydable).

Sans que ceci soit limitatif, il peut être notamment utilisé pour le couplage de charges blanches ou inorganiques renforçantes et d'élastomères diéniques, par exemple dans des compositions de caoutchouc destinées à la fabrication de pneumatiques. Par "charge inorganique renforçante", on entend de manière connue, une charge inorganique ou minérale, quelles que soient sa couleur et son origine (naturelle ou de synthèse), encore appelée charge "blanche" ou parfois charge "claire" par opposition au noir de carbone, cette charge inorganique étant capable de renforcer à elle seule, sans autre moyen qu'un agent de couplage intermédiaire, une composition de caoutchouc destinée à la fabrication de pneumatiques, en d'autres termes capable de remplacer, dans sa fonction de renforcement, une charge conventionnelle de noir de carbone de grade pneumatique.

Pour une telle utilisation, l'élastomère diénique est alors de préférence choisi dans le groupe des élastomères diéniques fortement insaturés constitué par les polybutadiènes (BR), les polyisoprènes de synthèse (IR), le caoutchouc naturel (NR), les copolymères de butadiène-styrène (SBR), les copolymères de butadiène-isoprène (BIR), les copolymères de butadiène-acrylonitrile (NBR), les copolymères d'isoprène-styrène (SIR), les copolymères de butadiène-styrène-isoprène (SBIR) et les mélanges de ces élastomères.

Lorsque le monohydroxysilane de l'invention est destiné au couplage (charge inorganique/élastomère diénique) dans une composition de caoutchouc formant par exemple tout ou partie d'une bande de roulement de pneumatique tourisme, l'élastomère diénique est alors de préférence un SBR ou un coupage (mélange) de SBR et d'un autre élastomère diénique tel que BR, NR ou IR. Dans le cas d'un élastomère SBR, on utilise notamment un SBR ayant une teneur en styrène comprise entre 20% et 30% en poids, une teneur en liaisons vinyliques de la partie butadiénique comprise entre 15% et 65%, une teneur en liaisons trans-1,4 comprise entre 15% et 75% et une température de transition vitreuse ("Tg" - mesurée selon norme ASTM D3418-82) comprise entre -20°C et -55°C, ce copolymère SBR, de préférence préparé en solution (SSBR), étant éventuellement utilisé en mélange avec un polybutadiène (BR) possédant de préférence plus de 90% de liaisons cis-1,4.

Lorsque la bande de roulement est destinée à un pneumatique utilitaire tel que Poids-lourd, l'élastomère diénique est alors de préférence un élastomère isoprénique, c'est-à-dire un élastomère diénique choisi dans le groupe constitué par le caoutchouc naturel (NR), les polyisoprènes de synthèse (IR), les différents copolymères d'isoprène et les mélanges de ces élastomères ; il s'agit alors plus préférentiellement de caoutchouc naturel ou d'un polyisoprène de synthèse du type cis-1,4 ayant un taux (% molaire) de liaisons cis-1,4 supérieur à 90%, plus préférentiellement encore supérieur à 98%.

Les monohydroxysilanes polysulfurés de l'invention se sont révélés suffisamment efficaces à eux seuls pour le couplage d'un élastomère diénique et d'une charge inorganique renforçante telle que la silice, utilisés à un taux préférentiel supérieur à 1 pce (parties en poids pour cent parties d'élastomère), plus préférentiellement compris entre 2 et 20 pce. Ils peuvent avantageusement constituer le seul agent de couplage présent dans des compositions de caoutchouc renforcées de charge inorganique et destinées à la fabrication de pneumatiques.

A titre de charge inorganique renforçante, on citera les charges minérales du type siliceuse, en particulier de la silice (SiO₂), ou du type alumineuse, en particulier de l'alumine (Al₂O₃) ou des (oxyde)hydroxydes d'aluminium, ou encore des oxydes de titane renforçants, tels que décrits dans les brevets ou demandes de brevet précités.

Les hydroxysilanes de l'invention pourraient aussi être utilisés préalablement greffés sur la charge inorganique renforçante (via leur fonction hydroxysilyle), la charge inorganique ainsi "précouplée" pouvant ensuite être liée à l'élastomère diénique par l'intermédiaire de la fonction libre polysulfure Sₓ.

### III. EXEMPLES DE REALISATION DE L'INVENTION

Dans les exemples de réalisation qui suivent, l'invention est mise en oeuvre avec un polysulfure de bis-(propyldiméthylsilanol) de formule particulière (III):

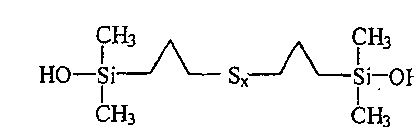

### III-1. Synthèse du monohydroxysilane polysulfuré

Cet essai décrit tout d'abord la synthèse du composé de formule (III) ci-dessus (ci-après dénommé produit D) selon un procédé conforme à l'invention réalisé en deux ou trois étapes, à partir du chloropropyl-diméthylchlorosilane (ci-après dénommé produit A), via le chloropropyl-diméthyléthoxysilane (ci-après dénommé produit B ; voie optionnelle) et le chloropropyl-diméthylsilanol (ci-après dénommé produit C).

Le schéma de synthèse appliqué est le suivant :

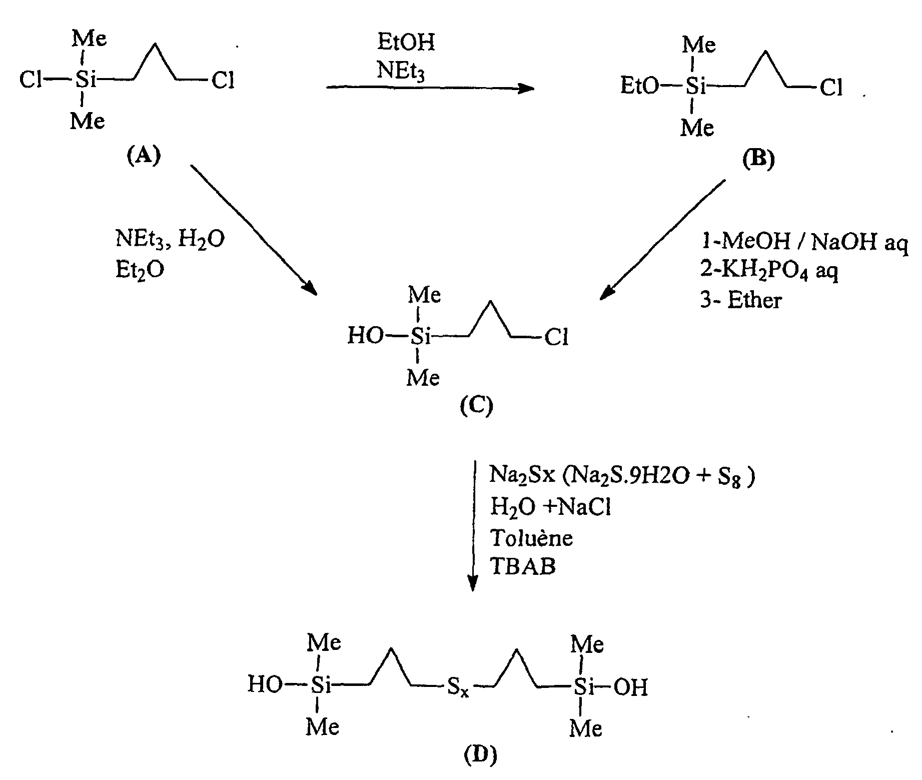

### a) préparation du chloropropyl-diméthyléthoxysilane (produit B)

La première étape consiste en une alcoolyse permettant de substituer le chlore porté par l'atome de silicium du produit A par un groupement éthoxyle de l'éthanol, cette réaction étant menée en présence de triéthylamine destinée à piéger l'acide chlorhydrique libéré au cours de la réaction.

Dans un tricol de 2 L (litre) (préalablement séché dans une étuve pendant 24 h), surmonté d'un réfrigérant et muni d'une agitation magnétique, on introduit, sous courant d'argon, 950 mL d'éthanol (grade Normapur) puis 288 mL de triéthylamine (2,07 mol soit 209g) à l'aide d'une seringue. Le mélange est alors refroidi à une température d'environ 5°C, avant de débuter l'addition du produit A (237,7 g soit 1,38 mol - produit de la société ABCR commercialisé sous la référence SIC2336.0), réalisée grâce à une pompe péristaltique ; l'acide chlorhydrique libéré est immédiatement piégé par la triéthylamine en formant le chlorhydrate de triéthylamine.

Une fois la coulée terminée (après environ 8h), le bain de glace est retiré tandis que l'agitation est poursuivie à la température ambiante toute la nuit, sous courant d'argon. Après huit heures, l'analyse CPG (chromatographie en phase gazeuse) montre la disparition du pic correspondant au produit A de départ et la formation du chloropropyl-diméthyléthoxysilane (produit B). Le milieu réactionnel est alors filtré sur tube d'Alhin afin de séparer le produit B en solution dans l'éthanol du chlorhydrate de triéthylamine.

Le filtrat contenant le produit B est concentré puis distillé sous vide (2 mm Hg ; température de bain d'huile 70°C ; température en haut de colonne 45°C), afin d'éliminer l'excès de triéthylamine libre et d'isoler le produit B à l'état pur.

On recueille ainsi 160 g d'un liquide incolore dont les analyses de RMN et de spectrométrie de masse confirment bien qu'il s'agit du produit B visé répondant à la formule suivante :

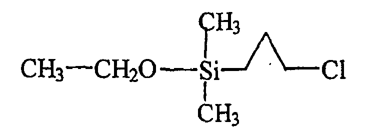

### b) préparation du chloropropyl-diméthylsilanol produit C)

Cette deuxième étape consiste à hydrolyser l'éthoxysilane précédent (en solution dans le méthanol) de façon à obtenir l'hydroxysilane. Cette réaction est menée par action d'une solution aqueuse de NaOH ; après réaction, l'excès de base introduit initialement est neutralisé par le dihydrogénophosphate de potassium.

Dans un tricol de 100 mL, surmonté d'un réfrigérant et muni d'une agitation magnétique, on introduit 2,62 g de soude (65 mmol soit 2,4 équivalents par rapport au produit B) que l'on dissout dans 15 mL d'eau déminéralisée. Après dissolution complète et lorsque la température de la solution est revenue à la température ambiante, on ajoute 20 mL de méthanol puis, à l'aide d'une ampoule de coulée, le produit B précédemment préparé (5 g soit 27,7 mmol) dilué dans 35 mL de méthanol. Le milieu réactionnel est alors maintenu sous agitation pendant 90 min, puis versé dans une solution aqueuse de dihydrogénophosphate de potassium (16 g de KH₂PO₄ dans 200 mL d'eau). La solution obtenue, qui présente un pH égal à 7, est agitée quelques minutes avant d'être mise en présence de 200 mL d'éther destinés à extraire le produit C formé. Le milieu biphasique est soumis alors à une agitation, pendant environ 30 à 45 min, puis introduit dans une ampoule à décanter. La phase organique isolée est lavée une fois à l'eau puis séchée sur du MgSO₄ avant d'être filtrée puis concentrée sous vide.

Le chromatogramme CPG du produit brut réactionnel ainsi recueilli présente alors trois pics que l'on peut attribuer respectivement au (i) chloropropyl-diméthylméthoxysilane, résultant vraisemblablement de la réaction du méthanol sur le produit B (de l'ordre de 2% en motifs d'après la RMN ¹H), au (ii) produit C visé, largement majoritaire (85% en motifs d'après la RMN ¹H), ainsi qu'au (iii) bis(chloropropyl)-tétraméthyldisiloxane (présent à 13% en motifs).

Une distillation sous vide, réalisée dans un four à boules (Kügelrohr), permet d'isoler le produit C. Au cours de cette distillation, la température du four est choisie préférentiellement inférieure à 45°C, pour limiter tout risque de voir le produit C se condenser en disiloxane correspondant. Ainsi, après avoir éliminé le chloropropyl-diméthylméthoxysilane en appliquant un vide de 1,3 mbar et une température de 35°C, on isole le produit C sous un vide de 1 mbar en chauffant à 40°C ; le bis(chloropropyl)-tétraméthyldisiloxane, en raison de sa température d'ébullition plus élevée, reste dans le ballon de distillation.

On isole ainsi 2,48 g d'un liquide incolore pur dont les analyses de RMN et de spectrométrie de masse confirment l'obtention du produit C répondant à la formule suivante :

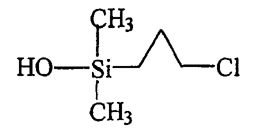

Comme expliqué précédemment, on peut aussi préparer le produit C ci-dessus directement par hydrolyse du produit A de départ, dans un solvant organique inerte (éther), en présence d'eau comme donneur d'hydroxyles et de triéthylamine destinée à piéger l'acide chlorhydrique libéré. On introduit de préférence un excès d'eau de manière à favoriser la réaction souhaitée, et éviter la réaction de condensation du silanol généré sur le chlorosilane additionné. L'emploi d'un léger excès de triéthylamine assure le piégeage total de l'acide chlorhydrique, la triéthylamine résiduelle étant distillée une fois la réaction terminée.

On procède plus précisément comme suit: dans un tricol de 500 mL, surmonté d'un réfrigérant et muni d'une agitation magnétique, on introduit 9,78 mL de triéthylamine (70,1 mmol, soit 1,5 équivalents par rapport au produit A), 3,36 g d'eau (187 mmol, soit 4 équivalents par rapport au produit A) puis 150 mL d'éther. On refroidit cette solution à l'aide d'un bain de glace (température < 10°C) avant d'additionner lentement une solution de produit A (8,0 g, soit 46,7 mmol dans 80 mL d'éther). On observe l'apparition immédiate d'un précipité blanc qui correspond au chlorhydrate de triéthylamine. Lorsque l'ajout de produit A est terminé, l'agitation du milieu réactionnel est poursuivie pendant 30 min, en restant à une température inférieure à 10°C. Le précipité formé est alors éliminé par filtration et le filtrat recueilli est séché sur du sulfate de magnésium, filtré puis concentré sous vide. La triéthylamine résiduelle est éliminée par distillation. On recueille ainsi 6,1 g d'un liquide jaune vif qui correspond, d'après les analyses réalisées en RMN et en spectrométrie de masse, au produit C visé (pureté du produit supérieure à 95%).

### c) préparation de l'hydroxysilane polysulfuré (produit D)

Dans cette dernière étape, le polysulfure de sodium, généré par insertion de soufre dans du sulfure de sodium Na₂S en milieu aqueux, vient substituer l'atome de chlore de deux molécules du produit C en solution dans du toluène. La réaction est conduite en présence d'un catalyseur de transfert de phase (TBAB) et de chlorure de sodium NaCl.

Dans un tricol de 250 mL, surmonté d'un réfrigérant et muni.d'une agitation magnétique, on introduit 3,50 g (soit 14,5 mmol) de Na₂S.9H₂O ainsi que 1,40 g (soit 43,7 mmol) de soufre qui sont dissous dans 40 mL d'une solution aqueuse de NaCl (5,0 g soit 85,8 mmol) et 8 mL de toluène. Ce mélange est chauffé à 85°C ; on observe, lors de la montée en température, que le milieu réactionnel passe de la couleur jaune à la couleur rouge foncé.

Une fois la température de consigne atteinte, on introduit en une seule fois 0,25 g de TBAB (soit 0,77 mmol), puis on commence l'addition goutte à goutte du produit C (4,60 g soit 28,6 mmol) en solution dans 30 mL de toluène. Au cours de l'addition, la phase toluénique présente une coloration rouge vif virant progressivement à l'orange, tandis que la phase aqueuse initialement rouge vif pâlit jusqu'à devenir incolore et limpide, une fois la coulée terminée. La réaction est ainsi poursuivie pendant 75 min, à la température de 85°C, puis le milieu réactionnel est refroidi sous argon.

Le milieu réactionnel est ensuite transvasé dans une ampoule à décanter de façon à isoler la phase toluénique, qui est séchée sur du sulfate de magnésium après avoir été lavée à l'eau. La solution organique est ensuite filtrée et reprise à l'éther avant d'être distillée dans un four à boules (40°C), afin d'évacuer le chloropropyl-diméthylsilanol (produit C) résiduel.

On recueille finalement 3,82 g d'un liquide rouge-orangé visqueux dont les analyses de RMN et de spectrométrie de masse confirment qu'il comporte (en % molaire):
- environ 95% de polysulfure de bis-(propyldiméthylsilanol) de formule (III): 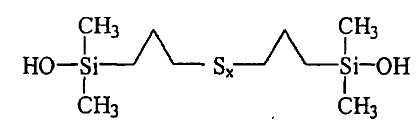
- environ 5% de composé siloxane cyclique de formule (IV) qui suit: 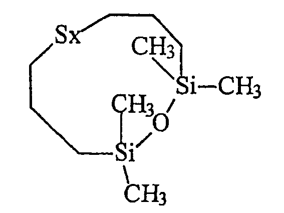 Le produit D ainsi synthétisé est en fait constitué d'une distribution de polysulfures, allant du disulfure (x=2) à l'hexasulfure (x=6), centrée sur une valeur moyenne x=3,7. Le taux de disulfure S₂, déterminé par RMN, est égal à environ 18% des motifs polysulfures.

Ce produit est donc constitué, comme c'est le cas notamment pour des polysulfures d'alkoxysilanes comme le TESPT, d'une distribution de polysulfures dont la valeur moyenne des x est proche de 4. On comprendra que des conditions de synthèse modifiées permettraient d'obtenir d'autres distributions de polysulfures, avec des valeurs moyennes de x variables mais de préférence comprises entre 2 et 6, plus préférentiellement comprises dans un domaine de 2 à 4.

### III-2. Utilisation comme agent de couplage

Cet essai a pour but de démontrer les performances améliorées de l'hydroxysilane de l'invention, en tant qu'agent de couplage dans une composition de caoutchouc pour pneumatique, comparé à un agent de couplage conventionnel (polysulfure d'alkoxysilane - TESPT) qui constitue la référence en la matière.

On prépare donc pour cela deux compositions de caoutchouc à base d'élastomères SBR et BR, renforcées de silice, notées C-1 et C-2, ces compositions étant destinées à des bandes de roulement pour pneumatiques tourisme. Ces deux compositions sont identiques, exception faite de l'agent de couplage utilisé :
- composition C-1 : TESPT;
- composition C-2 : produit D synthétisé ci-dessus;

Ces compositions sont préparées de manière connue, comme suit : on introduit dans un mélangeur interne, rempli à 70% et dont la température initiale de cuve est d'environ 60°C, l'élastomère diénique (ou le mélange d'élastomères diéniques, le cas échéant), la charge renforçante, l'agent de couplage, puis les divers autres ingrédients à l'exception du système de vulcanisation. On conduit alors un premier travail thermomécanique (phase dite non-productive) en une ou deux étapes (durée totale du malaxage égale à environ 7 min), jusqu'à atteindre une température maximale de "tombée" d'environ 165°C. On récupère le mélange ainsi obtenu, on le refroidit puis on ajoute le système de vulcanisation (soufre et accélérateur sulfénamide) sur un mélangeur externe (homo-finisseur) à 30°C, en mélangeant le tout (phase dite productive) pendant 3 à 4 minutes. Les compositions sont ensuite calandrées sous la forme de plaques (épaisseur de 2 à 3 mm) ou de feuilles fines de caoutchouc pour la mesure de leurs propriétés physiques ou mécaniques, ou extrudées pour former des profilés utilisables directement, après découpage et/ou assemblage aux dimensions souhaitées, en particulier comme bandes de roulement de pneumatique tourisme.

On rappelle que le TESPT (composition C-1) est le tétrasulfure de bis(3-triéthoxysilylpropyl), de formule [(C₂H₅O)₃Si(CH₂)₃S₂]₂ ; il est commercialisé par exemple par la société Degussa sous la dénomination "Si69" (ou "X50S" lorsqu'il est supporté à 50% en poids sur du noir de carbone), ou encore par la société Witco sous la dénomination "Silquest A1289" (dans les deux cas, mélange commercial de polysulfures Sₓ avec une valeur moyenne pour x qui est proche de 4).

La formule développée du TESPT est (Et = éthyle):

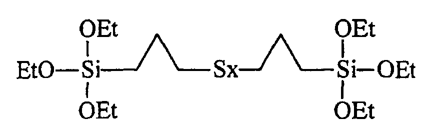

On note que la structure ci-dessus est très proche de celle du monohydroxysilane de l'invention ici testé (formule III), ce dernier ne s'en différenciant que par la présence d'un groupe hydroxyle et de deux méthyles en lieu et place des trois groupes alkoxyles conventionnels.

Les tableaux 1 et 2 donnent la formulation des deux compositions (tableau 1 - taux des différents produits exprimés en pce), leurs propriétés avant et après cuisson (environ 30 min à 150°C) ; le système de vulcanisation est constitué par soufre et accélérateur sulfénamide. Les deux compositions testées comportent en outre (non indiqué dans le tableau 1) une faible proportion de noir de carbone N330 (6 pce) utilisé en tant qu'agent de pigmentation noire et anti-UV.

Les figures 1 et 2 annexées reproduisent respectivement les rhéogrammes (couple en dN.m en fonction de la durée de vulcanisation en min) et les courbes de module (en MPa) en fonction de l'allongement (en %) ; ces courbes sont notées C1 et C2 sur la figure 1, puis C1' C2' sur la figure 2, et elles correspondent respectivement aux compositions C-1 et C-2.

L'examen des différents résultats du tableau 2 conduit aux observations suivantes:
- la composition C-2 comportant le produit D montre un temps de grillage plus court que celui de la composition témoin C-1, mais ce temps T5 reste suffisant pour offrir une marge de sécurité satisfaisante vis-à-vis du problème de grillage;
- les valeurs de plasticité Mooney restent basses (85 à 90 UM) dans tous les cas, la valeur la plus basse étant par ailleurs enregistrée sur la composition C-2 ; ceci est indicateur d'une très bonne aptitude des compositions de caoutchouc à la mise en oeuvre à l'état cru, au moins aussi bonne que celle des compositions conventionnelles utilisant des polysulfures d'alkoxysilanes;
- après cuisson, la composition C-2, comparée à la composition témoin, présente des valeurs de module sous forte déformation (M100 et M300) et un rapport (M300/M100) très proches, autant d'indicateurs clairs pour l'homme du métier de la qualité du couplage apporté par le produit D;
- les propriétés d'hystérèse apparaissent légèrement améliorées pour la composition C-2, comme illustré par une valeur plus basse tan(δ)ₘₐₓ (synonyme d'une faible résistance au roulement);
- enfin et surtout, on note que la composition C-2 se distingue, de manière inattendue, par une constante de vitesse de conversion K qui est plus de deux fois supérieure à celle de la composition témoin; en d'autres termes la cuisson de la composition peut être réalisée dans un temps nettement plus court.

Les rhéogrammes de la figure 1 annexée confirment bien la supériorité de la composition C-2 contenant l'hydroxysilane de l'invention : délai d'induction voisin de celui de la composition témoin ; couple maximal identique à celui de la composition témoin, mais atteint dans un temps nettement plus court ; constante de vitesse de conversion K plus élevée.

La figure 2 confirme aussi les observations précédentes : la courbe C2' (composition C-2) et la courbe C1' (composition témoin C-1) sont quasiment confondues, en particulier pour les plus grands allongements qui sont représentatifs du renforcement et donc de l'aptitude des compositions de caoutchouc à résister à l'usure.

En résumé, le comportement global de la composition contenant le monohydroxysilane de l'invention illustre non seulement une haute qualité de la liaison (ou couplage) entre la charge inorganique renforçante et l'élastomère diénique, au moins égale à celle disponible avec des polysulfures d'alkoxysilanes usuels tels que le TESPT, mais aussi, de manière inattendue, une aptitude à la vulcanisation très nettement améliorée.

Le remplacement d'un alkoxysilane polysulfuré tel que le TESPT par l'hydroxysilane polysulfuré de l'invention présente par ailleurs un avantage notable du point de vue de l'environnement et du problème posé par le dégagement des VOC ("*volatile organic compounds*"), les groupes alkoxyles d'un alkoxysilane (tels que les groupes éthoxyles du TESPT) étant en effet, de manière connue, à l'origine du dégagement d'alcool (éthanol), tant au cours de la fabrication des compositions de caoutchouc elles-mêmes que lors de la cuisson des articles en caoutchouc incorporant ces compositions.

En résumé, le monohydroxysilane de l'invention trouve donc une application particulièrement avantageuse comme agent de couplage dans des compositions de caoutchouc utilisables pour la fabrication de pneumatiques, notamment de bandes de roulement de pneumatiques présentant à la fois une faible résistance au roulement et une résistance élevée à l'usure, en particulier lorsque ces bandes de roulement sont destinées à des pneumatiques pour véhicules tourisme ou pour véhicules industriels du type Poids-lourd.

**Tableau 1**

| Composition N°: | C-1 | C-2 |
|---|---|---|
| SBR (1) | 75 | 75 |
| BR (2) | 25 | 25 |
| silice (3) | 80 | 80 |
| alkoxysilane (4) | 6.4 | - |
| produit D (5) | - | 4.6 |
| DPG (6) | 1.5 | 1.5 |
| ZnO | 2.5 | 2.5 |
| acide stéarique | 2 | 2 |
| antioxydant (7) | 1.9 | 1.9 |
| soufre | 1.1 | 1.1 |
| accélérateur (8) | 2 | 2 |

| | | |
|---|---|---|
| (1) SBR avec 59,5% de motifs polybutadiène 1-2 ; 26,5% de styrène ; étendu avec 37,5% d'huile aromatique (soit 37,5 pce d'huile pour 100 pce de SBR sec) ; Tg = -29 °C ; exprimé en SBR sec; | | |
| (2) BR avec 4,3 % de 1-2 ; 2,7% de trans ; 93% de cis 1-4 (Tg = -106°C); | | |
| (3) silice type "HD" - "Zeosil 1165MP" de la société Rhodia sous forme de microperles (BET et CTAB : environ 150-160 m²/g); | | |
| (4) TESPT ("Si69" de la société DEGUSSA-HÜLS); | | |
| (5) produit D synthétisé (polysulfure de bis-(propyl-diméthylsilanol) à 95 mol %); | | |
| (6) diphénylguanidine ("Vulcacit D" de la société Bayer); | | |
| (7) N-1,3-diméthylbutyl-N-phényl-para-phénylènediamine ("Santoflex 6-PPD" de la société Flexsys); | | |
| (8) N-cyclohexyl-2-benzothiazyl-sulfénamide ("Santocure CBS" de la société Flexsys). | | |

**Tableau 2**

| Composition N°: | C-1 | C-2 |
|---|---|---|
| *Propriétés avant cuisson:* | | |
| ML1+4 (UM) | 90 | 85 |
| T5(min) | 20 | 13 |
| tᵢ (min) | 9 | 7 |
| t₉₉ (min) | 41 | 21 |
| K (min⁻¹) | 0.14 | 0.32 |
| t₉₉- tᵢ (min) | 32 | 14 |
| Δ Couple | 17.8 | 19.6 |
| | | |
| *Propriétés après cuisson:* | | |
| M10 (MPa) | 7.0 | 6.8 |
| M100 (MPa) | 2.6 | 2.8 |
| M300 (MPa) | 4.4 | 4.3 |
| M300/M100 | 1.7 | 1.6 |
| tan (δ) max | 0.310 | 0.299 |
| Contrainte à la rupture (MPa) | 20.6 | 20.8 |
| Allongement à la rupture (%) | 416 | 443 |

## Revendications

1. Polysulfure de monohydroxysilane, de formule (I): 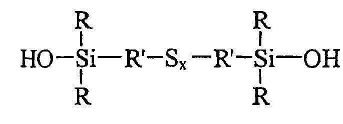
dans laquelle les radicaux R, identiques ou différents, sont des groupes hydrocarbonés ; les radicaux R', identiques ou différents, sont des groupes de liaison divalents ; x est supérieur ou égal à 2.

2. Polysulfure selon la revendication 1, les radicaux R comportant de 1 à 15 atomes de carbone, les radicaux R' comportant de 1 à 18 atomes de carbone.

3. Polysulfure selon la revendication 2, les radicaux R étant choisis parmi les alkyles en C₁-C₆, les cycloalkyles en C₅-C₈ et le radical phényle ; les radicaux R' étant choisis parmi les alkylènes en C₁-C₁₈ et les arylènes en C₆-C₁₂.

4. Polysulfure selon la revendication 3, les radicaux R étant choisis parmi les alkyles en C₁-C₃ et les radicaux R' étant choisis parmi les alkylènes en C₁-C₄.

5. Polysulfure selon la revendication 4, répondant à la formule (Me = méthyle) : 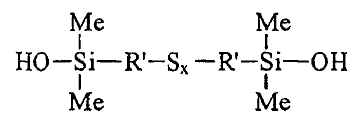
dans laquelle les radicaux R' sont des alkylènes en C₁-C₄.

6. Polysulfure selon les revendications 4 ou 5, les radicaux R' étant choisis parmi méthylène, éthylène et propylène.

7. Polysulfure selon la revendication 6, consistant en un polysulfure de bis-(propyldiméthylsilanol) de formule :

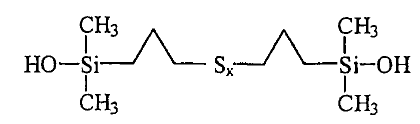

8. Polysulfure selon l'une quelconque des revendications 1 à 7, x étant compris dans un domaine de 2 à 9.

9. Polysulfure selon la revendication 8, choisi parmi les disulfures (x=2), trisulfures (x=3), tétrasulfures (x=4), pentasulfures (x=5), hexasulfures (x=6) et les mélanges de ces polysulfures.

10. Polysulfure selon la revendication 9, x étant compris dans un domaine de 2 à 4.

11. Procédé d'obtention d'un polysulfure selon l'une quelconque des revendications 1 à 10, **caractérisé en ce qu'**il comporte les étapes suivantes:
• on part d'un organosilane halogéné (ci-après produit A) de formule (A) (Hal=halogène): 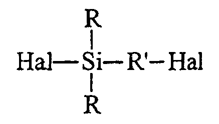
• optionnellement, on lui fait subir une alcoolyse par action d'un alcool (R"-OH) en présence d'une base organique destinée à piéger l'halogénure d'acide formé, pour obtenir un monoalkoxysilane (ci-après produit B) de formule (B): 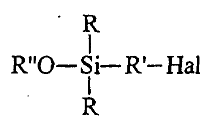
• on conduit, dans un solvant organique inerte, une hydrolyse par action d'un donneur d'hydroxyles :
- soit sur le produit (A), en présence, dans ce cas, d'une base organique pour piéger l'halogénure d'acide formé, le donneur d'hydroxyles étant de l'eau ;
- soit, le cas échéant, sur le produit (B), le donneur d'hydroxyles étant une base minérale et le solvant organique étant un solvant polaire ,
pour obtenir un monohydroxysilane (produit C) de formule (C) : 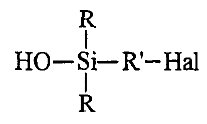
• on conduit finalement une étape de sulfuration sur le produit C, par action d'un polysulfure, pour aboutir au produit de formule (I) visé.

12. Procédé selon la revendication 11, Hal étant le chlore.

13. Procédé selon les revendications 11 ou 12, R" étant choisi parmi les alkyles en C₁ -C₆, de préférence en C₁-C₃.

14. Procédé selon l'une quelconque des revendications 11 à 13, l'alcoolyse étant conduite à une température inférieure à 15°C.

15. Procédé selon l'une quelconque des revendications 11 à 14, la base organique destinée à piéger l'halogénure d'acide formé étant une amine tertiaire.

16. Procédé selon l'une quelconque des revendications 11 à 15, l'hydrolyse étant réalisée directement sur le produit A.

17. Procédé selon l'une quelconque des revendications 11 à 15, l'hydrolyse étant réalisée sur le produit B.

18. Procédé selon la revendication 17, le solvant organique polaire étant choisi parmi les alcools en C₁-C₆, de préférence en C₁-C₃.

19. Procédé selon l'une quelconque des revendications 11 à 18, le donneur d'hydroxyles étant utilisé en excès par rapport à la quantité de produit A ou B.

20. Procédé selon l'une quelconque des revendications 11 à 19, le polysulfure étant un polysulfure (x ≥ 2) d'ammonium ou métallique, de formule M₂Sₓ ou M'Sₓ (M = métal alcalin ou NH₄ ; M' = Zn ou métal alcalino-terreux).

21. Procédé selon la revendication 20, le polysulfure étant un polysulfure de sodium Na₂Sₓ, de préférence généré par action de soufre sur Na₂S.

22. Procédé selon les revendications 20 ou 21, l'étape de sulfuration étant conduite en phase aqueuse ou dans un milieu biphasique eau/solvant organique, en présence d'un catalyseur de transfert de phase et d'un sel de formule M"Hal ou M"₂SO₄ (M" choisi parmi Li, Na et K ; Hal choisi parmi F, Cl et Br).

23. Utilisation, à titre d'agent de couplage, d'un polysulfure selon l'une quelconque des revendications 1 à 10.

## Claims

1. A monohydroxysilane polysulphide of the formula (I): 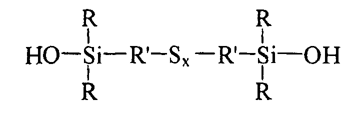
in which the radicals R, which may be identical or different, are hydrocarbon groups; the radicals R', which may be identical or different, are divalent linking groups; x is greater than or equal to 2.

2. A polysulphide according to Claim 1, the radicals R comprising from 1 to 15 carbon atoms, the radicals R' comprising from 1 to 18 carbon atoms.

3. A polysulphide according to Claim 2, the radicals R being selected from among C₁-C₆ alkyls, C₅-C₈ cycloalkyls and the phenyl radical; the radicals R' being selected from among C₁-C₁₈ alkylenes and C₆-C₁₂ arylenes.

4. A polysulphide according to Claim 3, the radicals R being selected from among C₁-C₃ alkyls and the radicals R' from among C₁-C₄ alkylenes.

5. A polysulphide according to Claim 4, of the formula (Me = methyl): 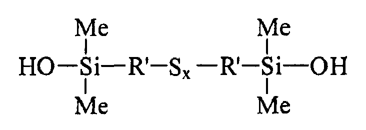
in which the radicals R' are C₁-C₄ alkylenes.

6. A polysulphide according to Claims 4 or 5, the radicals R' being selected from among methylene, ethylene and propylene.

7. A polysulphide according to Claim 6, consisting of a bis-(propyldimethylsilanol) polysulphide of the formula:

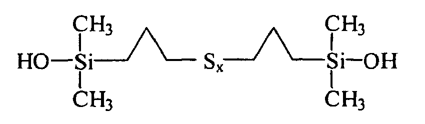

8. A polysulphide according to any one of Claims 1 to 7, x being within a range from 2 to 9.

9. A polysulphide according to Claim 8, selected from among disulphides (x = 2), trisulphides (x = 3), tetrasulphides (x = 4), pentasulphides (x = 5), hexasulphides (x = 6) and mixtures of these polysulphides.

10. A polysulphide according to Claim 9, x being within a range from 2 to 4.

11. A process for obtaining a polysulphide according to any one of Claims 1 to 10, **characterised in that** it comprises the following steps:
• the starting compound is a halogenated organosilane (hereafter product A) of the formula (A) (Hal = halogen): 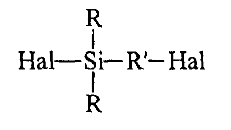
• said organosilane is optionally subjected to alcoholysis under the action of an alcohol (R"-OH) in the presence of an organic base intended to scavenge the resultant acid halide, in order to obtain a monoalkoxysilane (hereafter product B) of the formula (B): 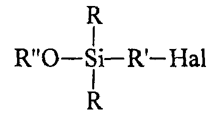
• hydrolysis by the action of a hydroxyl donor is performed in an inert organic solvent:
- either on the product (A) in the presence, in this case, of an organic base to scavenge the resultant acid halide, the hydroxyl donor being water;
- or, if applicable, on the product (B), the hydroxyl donor being an inorganic base and the organic solvent a polar solvent,
in order to obtain a monohydroxysilane (product C) of the formula (C): 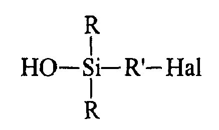
• finally, a sulphuration stage is performed on the product C by the action of a polysulphide to give rise to the intended product of the formula (I).

12. A process according to Claim 11, Hal being chlorine.

13. A process according to any one of Claims 11 or 12, R" being selected from among C₁₋C₆ alkyls, preferably C₁-C₃ alkyls.

14. A process according to any one of Claims 11 to 13, alcoholysis being performed at a temperature of less than 15°C.

15. A process according to any one of Claims 11 to 14, the organic base intended to scavenge the acid halide which is formed being a tertiary amine.

16. A process according to any one of Claims 11 to 15, hydrolysis being performed directly on product A.

17. A process according to any one of Claims 11 to 15, hydrolysis being performed on product B.

18. A process according to Claim 17, the polar organic solvent being selected from among C₁-C₆ alcohols, preferably C₁-C₃ alcohols.

19. A process according to any one of Claims 11 to 18, the hydroxyl donor being used in excess relative to the quantity of product A or B.

20. A process according to any one of Claims 11 to 19, the polysulphide being an ammonium or metal polysulphide (x ≥ 2), of the formula M₂Sₓ or M'Sₓ (M = alkali metal or NH₄; M' = Zn or alkaline-earth metal).

21. A process according to claim 20, the polysulphide being a sodium polysulphide Na₂Sₓ, preferably obtained by the action of sulphur on Na₂S.

22. A process according to Claims 20 or 21, the sulphuration stage being performed in an aqueous phase or in a biphasic water/organic solvent medium, in the presence of a phase-transfer catalyst and a salt of the formula M"Hal or M"₂SO₄ (M" selected from among Li, Na and K; Hal selected from among F, Cl and Br).

23. Use as a coupling agent of a polysulphide according to any one of Claims 1 to 10.

## Patentansprüche

1. Monohydroxysilanpolysulfid der Formel (I): 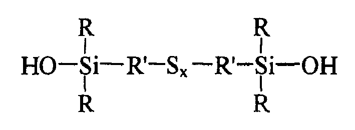
worin die Radikale R, die gleich oder verschieden sind, Kohlenwasserstoffgruppen bedeuten ; die Radikale R', die gleich oder verschieden sind, zweiwertige Verbindungsgruppen sind; und x größer oder gleich 2 ist.

2. Polysulfid nach Anspruch 1, wobei die Radikale R 1 bis 15 Kohlenstoffatome enthalten und die Radikale R' 1 bis 18 Kohlenstoffatome enthalten.

3. Polysulfid nach Anspruch 2, wobei die Radikale R unter den C₁₋₆₋Alkylgruppen, C₅₋₈-Cycloalkylgruppen und Phenyl ausgewählt sind; und die Radikale R' unter den C₁₋₁₈-Alkylengruppen und C₆₋₁₂₋Arylengruppen ausgewählt sind.

4. Polysulfid nach Anspruch 3, wobei die Radikale R unter den C₁₋₃₋Alkylgruppen und die Radikale R' unter den C₁₋₄-Alkylengruppen ausgewählt sind.

5. Polysulfid nach Anspruch 4, das der folgenden Formel entspricht (Me = Methyl): 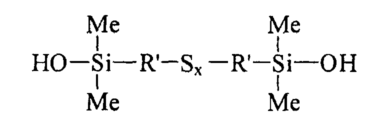 worin die Radikale R' C₁₋₄-Alkylengruppen bedeuten.

6. Polysulfid nach Anspruch 4 oder 5, wobei die Radikale R' unter Methylen, Ethylen und Propylen ausgewählt sind.

7. Polysulfid nach Anspruch 6, das ein Bis(propyldimethylsilanol)-polysulfid der folgenden Formel ist:

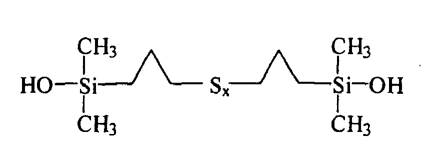

8. Polysulfid nach einem der Ansprüche 1 bis 7, wobei x im Bereich von 2 bis 9 liegt.

9. Polysulfid nach Anspruch 8, das unter den Disulfiden (x=2), Trisulfiden (x=3), Tetrasulfiden (x=4), Pentasulfiden (x=5), Hexasulfiden (x=6) und den Gemischen dieser Polysulfide ausgewählt ist.

10. Polysulfid nach Anspruch 9, wobei x im Bereich von 2 bis 4 liegt.

11. Verfahren zur Herstellung eines Polysulfids nach einem der Ansprüche 1 bis 10, **dadurch gekennzeichnet, dass** es die folgenden Schritte umfasst:
• Man geht von einem halogenierten Organosilan (das im Folgenden als Produkt A bezeichnet wird) der Formel (A) aus (Hal=Halogen): 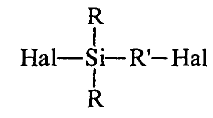
• Optional wird mit dieser Verbindung eine Alkoholyse durch Einwirkung eines Alkohols (R"-OH) in Gegenwart einer organischen Base, die das gebildete Saürehalogenid abfangen soll, durchgeführt, um ein Monoalkoxysilan der Formel (B) zu erhalten (im Folgenden als Produkt B bezeichnet): 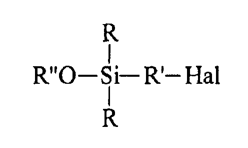
• In einem inerten organischen Lösungsmittel wird durch Einwirkung eines Hydroxy-Donors eine Hydrolyse durchgeführt:
- entweder mit dem Produkt (A) in diesem Fall in Gegenwart einer organischen Base, um das gebildete Saürehalogenid abzufangen, wobei der Hydroxy-Donor Wasser ist;
- oder gegebenenfalls mit dem Produkt (B), wobei der Hydroxy-Donor eine anorganische Base ist und das organische Lösungsmittel ein polares Lösungsmittel ist,
um ein Monohydroxysilan (Produkt C) der Formel (C) herzustellen: 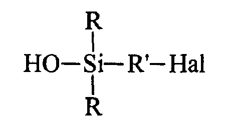
• Schließlich wird mit dem Produkt C durch Einwirkung eines Polysulfids ein Sulfurierungsschritt durchgeführt, um das gewünschte Produkt der Formel (I) herzustellen.

12. Verfahren nach Anspruch 11, wobei Hal Chlor bedeutet.

13. Verfahren nach den Ansprüchen 11 oder 12, wobei R" unter den C₁₋₆-Alkylgruppen und vorzugsweise den C₁₋₃-Alkylgruppen ausgewählt ist.

14. Verfahren nach einem der Ansprüche 11 bis 13, wobei die Alkoholyse bei einer Temperatur unter 15 °C durchgeführt wird.

15. Verfahren nach einem der Ansprüche 11 bis 14, wobei die organische Base, die dazu vorgesehen ist, das gebildete Saürehalogenid abzufangen, ein tertiäres Amin ist.

16. Verfahren nach einem der Ansprüche 11 bis 15, wobei die Hydrolyse direkt am Produkt (A) erfolgt.

17. Verfahren nach einem der Ansprüche 11 bis 15, wobei die Hydrolyse am Produkt (B) durchgeführt wird.

18. Verfahren nach Anspruch 17, wobei das polare organische Lösungsmittel unter den C₁₋₆-Alkoholen und vorzugsweise unter den C₁₋₃-Alkoholen ausgewählt ist.

19. Verfahren nach einem der Ansprüche 11 bis 18, wobei der Hydroxy-Donor in Bezug auf die Menge von Produkt (A) oder Produkt (B) im Überschuss verwendet wird.

20. Verfahren nach einem der Ansprüche 11 bis 19, wobei das Polysulfid ein Ammoniumpolysulfid oder Metallpolysulfid (x ≥ 2) der Formel M₂Sₓ oder M'Sₓ ist (M = Alkalimetall oder NH₄; M' = Zn oder Erdalkalimetall).

21. Verfahren nach Anspruch 20, wobei das Polysulfid ein Natriumpolysulfid Na₂Sₓ ist, das vorzugsweise durch Einwirkung von Schwefel auf Na₂S gebildet wird.

22. Verfahren nach den Ansprüchen 20 oder 21, wobei der Sulfurierungsschritt in einer wässerigen Phase oder einem zweiphasigen Medium Wasser/organisches Lösungsmittel in Gegenwart eines Phasentransferkatalysators und eines Salzes der Formel M"Hal oder M"₂SO₄ (M" ist unter Li, Na und K; Hal unter F, Cl und Br ausgewählt) durchgeführt wird.

23. Verwendung eines Polysulfids nach einem der Ansprüche 1 bis 10 als Kupplungsmittel.
